## Europäisches Patentamt
## European Patent Office
## Office européen des brevets

(19)

(11) Numéro de publication: **0 082 039**
**B1**

(12) **FASCICULE DE BREVET EUROPEEN**

(45) Date de publication du fascicule du brevet: **22.04.87**

(51) Int. Cl.⁴: **F 16 D 31/02**

(21) Numéro de dépôt: **82402167.9**

(22) Date de dépôt: **29.11.82**

(54) Embrayage hydrostatique.

(30) Priorité: **30.11.81 FR 8122468**

(43) Date de publication de la demande:
**22.06.83 Bulletin 83/25**

(45) Mention de la délivrance du brevet:
**22.04.87 Bulletin 87/17**

(73) Titulaire: **HYDRO RENE LEDUC (Société Anonyme)**
**Azerailles**
**F-54120 Baccarat (FR)**
(73) Titulaire: **GLYCO ANTRIEBS TECHNIK GMBH**
**Stielstrasse 18**
**D-6200 Wiesbaden (DE)**

(72) Inventeur: **Porel, Louis-Claude**
**70, rue de Moulins**
**Jeanmenil F-88700 Rambervillers (FR)**
Inventeur: **Cyphelly, Ivan**
**San Nicolas de Tolentino Gran Canaria (ES)**

(84) Etats contractants désignés:
**CH DE GB LI**

(56) Documents cités:
**FR-A- 477 146**
**FR-A- 655 576**
**FR-A-2 470 266**
**FR-A-2 481 757**
**GB-A- 542 737**
**US-A-2 408 574**
**US-A-2 511 518**
**US-A-2 546 062**

(74) Mandataire: **Loyer, Bertrand et al**
**Cabinet Pierre Loyer 18, rue de Mogador**
**F-75009 Paris (FR)**

EP 0 082 039 B1

Courier Press, Leamington Spa, England.

**Description**

L'invention a pour objet un embrayage hydrostatique.

Il est connu de réaliser un embrayage hydrostatique au moyen d'une pompe hydraulique dont en fait varier le débit, si par exemple le carter de la pompe est relié à l'organe mené tandis que l'arbre de la pompe est l'organe menant, on comprend que lorsque le débit de la pompe est nul l'arbre de la pompe et son carter sont verrouillés hydrauliquement, ils tournent sensiblement à la même vitesse; tandis que lorsque le débit de la pompe est maximum l'arbre tourne et le carter est immobile. On a réalisé de nombreux embrayages hydrostatiques en application de ce principe général, mais pour cela il faut que. la pompe employée réponde aux impératifs suivants;

a. Il faut que, lorsque l'organe menant et l'organe mené sont solidaires (position embrayée), les fuites internes de la pompe, dont les éléments de pompage sont immobilisés ou pratiquement immobilisés par verrouillage hydraulique, ne soient pas réaspirées par la pompe, car cela entraînerait un échauffement rapide du liquide provoquant la destruction de la pompe.

b. Il faut que la pompe soit auto-amorçable et qu'elle reste amorcée même aux plus hauts régimes envisagés.

c. Il faut que la pompe puisse fonctionner dans les deux sens de rotation.

d. Il faut que la pompe présente, en position débrayée, un couple résiduel négligeable.

Ces divers impératifs ont pour effet qu'il n'a pas jusqu'à présent été possible de réaliser un embrayage hydrostatique au moyen d'une pompe à pistons, que les pistons soient radiaux ou axiaux, alors qui ce type de pompe est celui qui permet d'avoir les plus faibles fuites internes.

Il est connu, par exemple, par le brevet US—A—2.408.574 MORRIS d'employer une pompe à pistons entraînés par un plateau biais pour réaliser une transmission hydraulique. Cependant, le mécanisme décrit dans ce brevet ne comporte que deux possibilités de fonctionnement ou bien les deux arbres sont solidarisés et tournent à la même vitesse, ou bien ils sont complètement désolidarisés ce dispositif est donc impuissant à permettre de réaliser un embrayage hydraulique.

Dans le brevet US—A—2.511.518 STEPHENS, on a décrit un embrayage hydraulique comportant des pistons de pompage qui, lorsqu'ils sont verrouillés hydrauliquement réalisent l'accouplement d'un arbre menant et d'un arbre mené cependant, dans ce dispositif le liquide provenant des inévitables fuites internes est continuellement recyclé de sorte qu'il est continuellement chauffé par l'action de pompage des pistons de sorte que l'embrayage est très rapidement détruit par l'augmentation continuelle de la température du liquide hydraulique.

L'embrayage hydraulique selon la présente invention a pour objet un embrayage hydrostatique constitué par une pompe à pistons et est réalisé de façon que les fuites internes inévitables soient évacuées hors de l'embrayage et recueillies dans un réservoir après être passées dans un échangeur thermique qui permet d'évacuer la chaleur emmagasinée, la structure du mécanisme étant telle qu'il n'y a aucune possibilité de communication entre la partie aspiration et la partie refoulement et donc aucun effet d'échauffement cumulatif.

L'embrayage hydrostatique selon l'invention est constitué par une pompe hydrostatique, en particulier une pompe hydraulique à auto-amorçage et à sens de rotation réversible, par exemple une pompe à pistons, dont le carter est relié à l'arbre mené et dont l'arbre moteur constitue l'arbre menant, le mouvement relatif de l'un par rapport à l'autre provoquant, par l'intermédiaire d'une surface faisant came, la mise en action d'une pluralité de pistons de pompage, le liquide hydraulique étant puisé dans un réservoir et ramené après pompage audit réservoir à travers un dispositif de régulation de débit permettant de régler ce débit depuis sa valeur maximum pour laquelle le mouvement relatif de l'arbre menant par rapport à l'arbre mené est maximum, jusqu'à une valeur nulle pour laquelle le mouvement relatif de l'arbre menant par rapport à l'arbre mené est nul, caractérisé par le fait qu'on a disposé, entre les zones où il y a des fuites et le côté d'aspiration, des joints d'étanchéité tournants qui évitent le débordement des fuites vers le côté d'aspiration, prévoyant un orifice de drainage qui permet de ramener directement les fuites au réservoir au moyen de composants hydrauliques appropriés, en particulier des échangeurs thermiques.

A titre d'exemples non limitatifs, on a représenté aux dessins annexés:

La figure 1 représente en coupe axiale un premier mode de réalisation d'un embrayage selon l'invention dans lequel les organes d'entrée et de sortie sont des arbres coaxiaux;

La figure 2 représente, en coupe axiale, un deuxième mode de réalisation d'un embrayage selon l'invention dans lequel le boîtier est tournant, les pistons étant axiaux;

La figure 3 représente en coupe axiale, un troisième mode de réalisation d'un embrayage selon l'invention dans lequel le boîtier est tournant et les pistons radiaux.

Dans la description qui suit, les organes qui ont la même fonction sont repérés par le même numéro, indépendamment de leurs différences d'agencement topologiques selon les versions radiales ou axiales.

Le coeur volumétrique des embrayages hydrostatiques concernés par la présente invention est un jeu de pistons 1, 1', 1" glissant dans un bloc-cylindres 5, 5', 5" appliqués au moyen de ressorts 2, 2', 2" soit par patins 3, 3' interposés contre un plateau biais 4, 4', soit par billes 3" interposées contre une came 4", de façon à imprimer un mouvement de va-et-vient aux pistons 1, 1', 1" par rapport au bloc-cylindres 5, 5', 5" dès qu'il y a rotation relative entre ce dernier et le plateau biais 4, 4′ ou la came 4″ respectivement. Les roulements 6, 6′, 6″ et 7, 7′, 7″ servent à positionner le plateau biais 4, 4′ ou la came 4″ par rapport au bloc-cylindres 5, 5′, 5″. L'ouverture des clapets d'aspiration 8, 8′, 8″ maintenus en position fermée par les ressorts 11, 11′, 11″ est assistée par les ressorts 9, 9′, 9″ s'appuyant sur les billes 10, 10′, 10″, ceux-ci dominant les ressorts de fermeture 11, 11′, 11″ dès que la came 12, 12′, 12″ à indexage 13, 13′, 13″ impose la levée des clapets 8, 8′, 8″ sauf si une pression résiduelle dans le cylindre concerné maintient la fermeture de ces derniers.

Pour assurer la synchronisation de la courbe de levée des clapets d'aspiration par rapport aux points morts lors d'une inversion des rotations relatives, la came 12, 12′, 12″ doit pouvoir effectuer une rotation de 180° dans le cas de mécanismes à une course par tour et par piston, tel que le plateau biais 4, 4′, ou 90° pour une came 4″ qui permettrait deux courses par tour; à cet effet, la came 12, 12′, 12″ est en butée contre un roulement 14, 14′, 14″ pour assurer une inversion instantanée de la synchronisation délimitée par les doigts d'indexage 13, 13′, 13″ et induite par le frottement des billes 10, 10′, 10″.

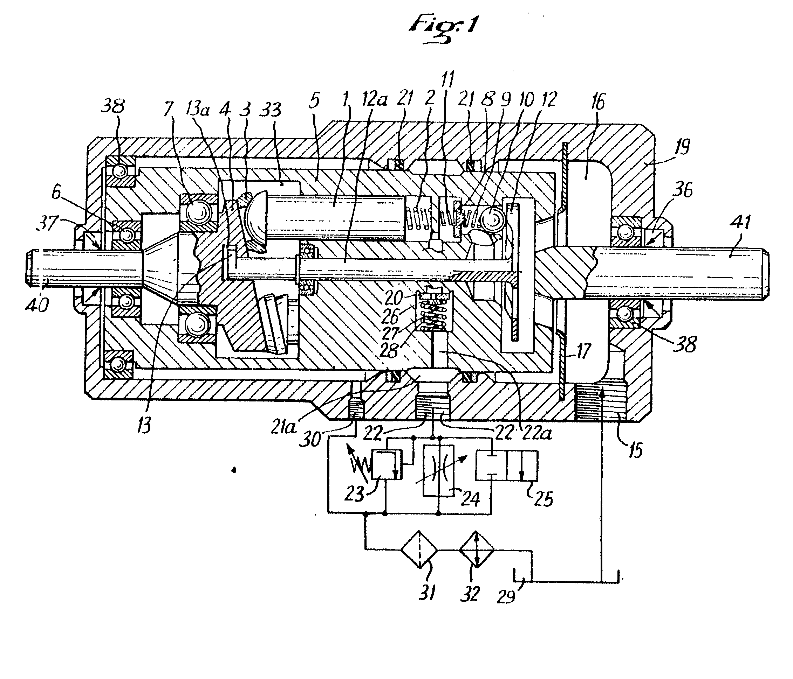

Dans le cas de la figure 1, la came 12 est portée par une tige à l'extrémité opposée de laquelle est fixé un doigt d'indexage 13 qui peut se déplacer dans une rainure ménagée dans le plateau biais, pour aller de l'une à l'autre de deux positions définies par les extrémités de la rainure, ces positions étant décalées de 180°.

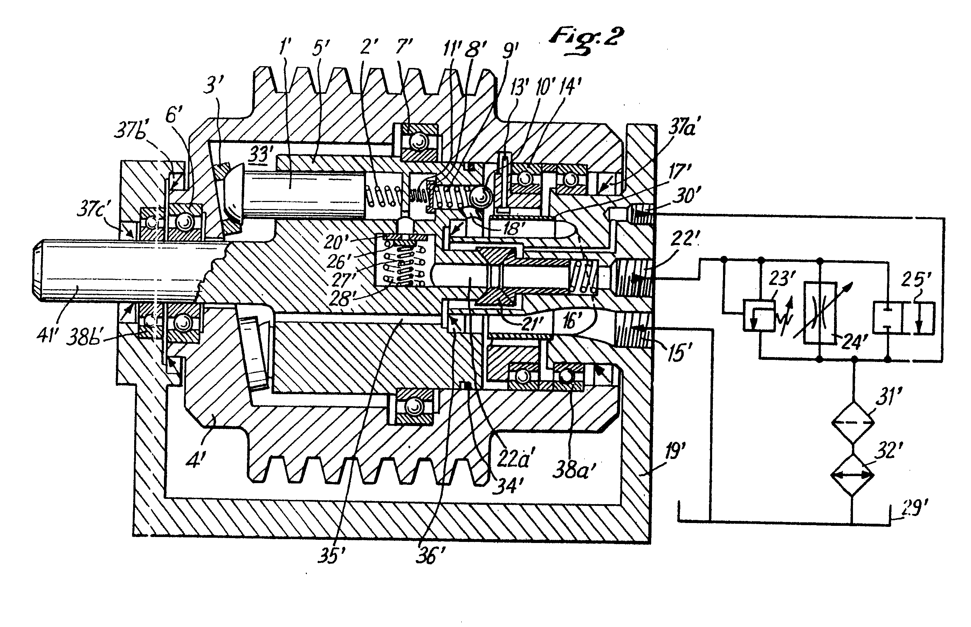

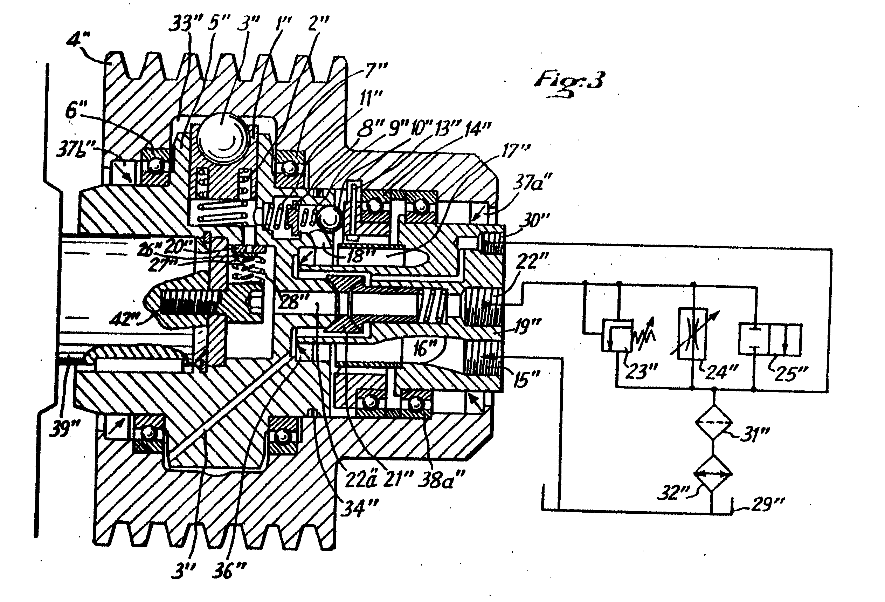

Dans le cas des figures 2 et 3, la came 12′, 12″ porte un doigt d'indexage 13′, 13″ qui de façon analogue se déplace entre les deux extrémités d'une rainure ménagée dans le boîtier 4′, 4″ portant la surface faisant came qui actionne les pistons 1′, 1″.

Les clapets d'aspiration sont alimentés à partir de la bâche 29, 29′, 29″ par l'orifice d'aspiration 15, 15′, 15″ dans le carter fixe 19, 19′, 19″ vers la chambre d'aspiration 16, 16′, 16″ bordée par l'écran 17, 17′, 17″ qui conduit le fluide vers les ouvertures 18, 18′, 18″ qui débouchent en amont des clapets susmentionnés.

Pour que l'auto-amorçage soit possible, il faut que lorsque les pistons ne refoulent que de l'air la levée des clapets de refoulement soit réalisée par l'air refoule tandis que lorsqu'ils refoulent du liquide à haute pression leur fermeture soit très rapide. Il faut donc que les ressorts de rappel de fermeture soient à la fois énergiques et faibles. Cet impératif contradictoire est résolu en disposant des clapets à deux étages, tels que les clapets 20, 20′, 20″ qui comportent un clapet principal rappelé par un ressort énergique 28, 28′, 28″, ce clapet principal étant percé d'un orifice lui-même fermé par un deuxième clapet 26, 26′, 26″, rappelé par un ressort faible 27, 27′, 27″.

Le liquide refoulé passe à travers les clapets 20, 20′, 20″ et atteint l'orifice de sortie 22, 22′, 22″ porté par le carter fixe 19, 19′, 19″ au moyen d'un joint tournant qui est soit un joint de transfert d'arbre 21, soit un raccord tournant 21′, 21″. L'orifice de sortie 22, 22′, 22″ est lui-même raccorde aux dispositifs hydrauliques de commande et de régulation tels que limiteur de pression 23, 23′, 23″ régulateur de débit 24, 24′, 24″, robinet 25, 25′, 25″ etc.

Les fuites s'écoulant par le jeu des pistons 1, 1′, 1″ dans leurs alésages du bloc-cylindres 5, 5′, 5″ et échauffées par la chute de pression et les frottements sont ramenées à la bâche 29, 29′, 29″ à travers l'orifice de fuite 30, 30′, 30″ joignant le filtre 31, 31′, 31″ et l'échangeur thermique 32, 32′, 32″ en aval des moyens de commande et de régulation.

Dans le premier mode de réalisation (figure 1), l'orifice de fuite 30 est placé entre la zone neutre 33 et le joint 21 de sorte que les fuites provenant du jeu des pistons 1 dans leurs alésages, pratiqués dans le corps 5, et s'écoulant dans la zone neutre 33 sont évacuées par l'orifice 30. Dans le deuxième et troisième mode de réalisation, la zone neutre 33′, 33″ est reliée par un perçage 35′, 35″, dans une zone limitée par le joint à lèvres 36′, 36″, cette zone étant elle-même reliée à l'orifice d'évacuation des fuites 30′, 30″. De plus dans ces deux cas, un joint 34′, 34″ doit être interposé entre les deux organes mobiles 4′, 4″ et 5′, 5″.

Il est à noter que les fuites du raccord tournant 21′, 21″ sont drainées elles aussi vers le raccord 30′, 30″ par le même dispositif, évitant par là une destruction rapide de l'embrayage par échauffement local lors d'une augmentation accidentelle des fuites dudit raccord tournant.

L'écran 17, 17′, 17″ protège l'écoulement du liquide en aspiration des parties en rotation; un entraînement en rotation du liquide aspiré provoquerait soit par des tourbillons, soit par la force centrifuge, une augmentation critique de la perte de charge pouvant aller jusqu'à la cavitation.

En plus d'éléments auxiliaires tels que joints d'arbre 37a, 37a′, 37a″, 37b, 37b′, 37b″ ou 37c′, de roulements 38a, 38a′, 38a″ et 38b, 38b′, positionnant le corps fixe par rapport aux parties en rotation, il convient de noter que pour l'embrayage de la figure 3, l'ensemble repose sur un arbre 39″ emmanché dans l'organe tournant 5″ portant les cylindres, cet organe tournant pouvant être indifféremment la prise de force d'entrée ou de sortie, tout comme les deux bouts d'arbre 40, 41 du modèle à boîtier fixe (figure 1) ou l'arbre 41′ et la poulie 4′ (figure 2) sont insensibles au sens du flux d'énergie.

Le fonctionnement des dispositifs ainsi décrits est décrit ci-après:

Dans le cas de la figure 1, les deux organes menant et/ou mené sont chacun solidaire d'un arbre 40 ou 41, ces deux arbres étant coaxiaux. L'arbre 40 est solidaire d'un plateau biais 4 qui constitue la première surface faisant came; l'arbre 41 est solidaire d'un corps cylindrique 5 appelé barillet, qui comporte une pluralité d'alésages parallèles entre eux et à l'axe des arbres 40 et 41. Dans ces alésages sont disposés des pistons 1 contretenus par des ressorts 2 et reposant par des plots 3 contre la face inclinée du plateau biais 4. L'arbre 40 et le plateau biais 4 sont tenus par des roulements 6 et 7 portés par le barillet 5. A l'arrière des alésages de pistons sont disposés des clapets d'aspiration 8. Chaque clapet 8 est contretenu par un ressort 11. A l'autre face de chaque clapet 8 est disposé en appui un ressort 9 dont l'autre extrémité est en appui contre une bille 10 reposant sur la surface d'une came circulaire 12. La came circulaire 12 est portée par une tige 12a coaxiale aux arbres 40 et 41. Cette tige 12a est entraînée en rotation par l'arbre 40. A cette fin, elle comporte un doigt 13 qui se déplace dans une rainure 13a. Ladite rainure 13a comporte deux parois d'extrémité disposées de telle sorte que le doigt 13 puisse venir occuper deux positions décalées l'une par rapport à l'autre de 180° suivant le sens de rotation de l'arbre 40. La came 12 agit sur chaque clapet 8 par l'intermédiaire des ressorts 9 à l'encontre des ressorts de rappel 11 desdits clapets. Cette disposition décrite dans le document FR—A—2470266 et son addition, le document FR—A—2481757 permet le bon remplissage des pistons, une ouverture des clapets d'aspiration, après que la pression rédisuelle dans la chambre morte de l'alésage de chaque piston soit tombée en-dessous d'une valeur prédéterminée et l'inversion du sens de rotation. Les chambres situées à l'arrière des pistons sont reliées à un clapet de refoulement à deux étages. Ce clapet comporte un clapet principal 20 contretenu par un ressort 28; le clapet principal 20 est muni en son centre d'un perçage fermé par un deuxième clapet 26 contretenu par un ressort 27. Le ressort 28 est fortement taré et le ressort 27 faiblement taré. Cette disposition décrite dans le document FR—A—2449210 permet l'auto-amorçage lorsque les chambres situées à l'arrière des pistons sont remplies d'air: la pression de l'air comprimé est insuffisante pour soulever le clapet 20 mais soulève le clapet 26 et, une fois que l'air est évacué et que la canalisation de refoulement est remplie de liquide, le clapet auxiliaire 26 ne joue plus aucun rôle. Le clapet de refoulement débouche par une canalisation 22a, dans une gorge circulaire 21a délimitée par les deux rebords cylindriques d'un joint tournant 21 en deux parties. Dans la gorge 21a débouche l'orifice 22 porté par le carter 19 qui enveloppe les deux organes mobiles 4 et 5.

Le carter 19 porte l'orifice d'alimentation 15 qui débouche dans une chambre 16 intérieure au carter 19, dans laquelle fait saillie la partie arrière du barillet 5 qui comporte des orifices d'alimentation 18 communiquant avec les clapets d'aspiration 8. De préférence, un écran 17, placé dans la chambre 16 guide le fluide vers les ouvertures 18 en évitant les tourbillons. Le carter 19 porte les arbres 40 et 41 au moyen des roulements 38 associés à des joints d'étanchéité 36 et 37.

Le carter 19 porte également, outre l'orifice de refoulement 22, un orifice de drainage 30 qui a pour objet d'évacuer les fuites des pistons en provenance de la chambre 33 dans laquelle se déplace le plateau biais 4.

L'orifice d'alimentation 15 est relié au réservoir 29; l'orifice de refoulement 22 est relié aux organes de commande et de régulation constitué par exemple par un limiteur de pression 23, un régulateur de débit 24, un robinet 25. Ces organes sont disposés en parallèle et débouchent vers un filtre 31 et un échangeur thermique 32, en série, qui s'écoulent dans le réservoir 29.

L'orifice de drainage 30 est relié au circuit en aval des organes de commande 23, 24, 25 et en amont du filtre 31. Supposons, par exemple, que l'arbre 40 soit reliée à un moteur et l'arbre 41 à une machine quelconque devant être entraînée par ce moteur par l'intermédiaire d'un embrayage hydrostatique, l'arbre 40, organe menant, entraîne en rotation le plateau biais 4. Si la disposition des organes de commande 23, 24, 25 est telle que le fluide hydraulique puisse circuler librement, le mouvement du plateau biais 4 entraîne les pistons 1, le liquide arrivant dans la chambre 16 par l'orifice 15 étant aspiré à travers les clapets 8 puis refoulé à travers le clapet à double étage 20, 26 et ressortant par l'orifice 22, le dispositif est en position débrayée. Si la disposition des organes de commande est telle que aucun débit n'est possible par l'orifice 22, les pistons 1 ne peuvent plus refouler le liquide qui se trouve dans leurs alésages et l'organe menant, c'est-à-dire le plateau biais 4, se trouve solidarisé par verrouillage hydraulique au barillet 5 qui se trouve ainsi entraîné en rotation; le dispositif est alors en position embrayée. On comprend qu'entre ces deux positions embrayée et débrayée, il est possible, en ajustant le débit sortant de l'orifice 22 d'obtenir un glissement plus ou moins important et déterminé à volonté, entre l'organe menant et l'organe mené.

Sur la figure 2, on voit que l'arbre 41' est solidaire du barillet 5', comportant les alésages dans lesquels se déplacent les pistons 1'; tandis que l'autre organe mobile est un boîtier 4' qui porte la surface faisant came, c'est-à-dire le plateau biais. Cet organe mobile en forme de boîtier comporte une série de gorges de poulies. Les clapets d'admission 8' ou de refoulement 20', 26' sont identiques au cas précédent. La deuxième surface faisant came 12' est portée par un roulement 14'; elle comporte un doigt d'indexage 13' qui se déplace dans une rainure ménagée dans la masse de l'organe mobile 4', cette rainure comportant deux parois d'extrémité contre l'une ou l'autre desquelles vient buter le doigt d'indexage 13'. Ces deux extrémités de la rainure sont disposées de façon que les deux positions possibles du doigt 13' soient décalées de 180°. Dans ce cas, la came 12' est donc entraînée par le boîtier 4'. Le carter 19 enveloppe partiellement les deux organes rotatifs 4' et 5'. Il porte l'arbre 41' par un roulement 38b' et le boîtier 4' par le roulement 38a'; tandis que le boîtier 4' est monté à rotation sur l'arbre 41' par deux roulements 6' et 7'. L'étanchéité entre le barillet 5' et le boîtier 4' est assurée par un joint circulaire 34'. La jonction étanche entre le refoulement, par la conduite 22'a solidaire de l'organe 5' est assurée par un joint tournant 21'.

Ce joint tournant est constitué par un plot biconique sur les deux faces coniques duquel viennent prendre appui d'une part une tête en portion de sphère ménagée à l'extrémité de la canalisation 22'a et d'autre part la tête en portion de sphère d'un piston creux contretenu par un ressort. Une telle disposition décrite dans les brevets 69.13171 et 72.38168, assure une excellente liaison étanche entre une pièce fixe et une pièce mobile.

Le fonctionnement du dispositif décrit à la figure 2 est identique à celui du dispositif décrit à la figure 1. Cependant, dans ce cas, les fuites internes pouvant apparaître dans la chambre 33' sont ramenées par un perçage 35' depuis la face avant du barillet jusqu'à sa face arrière, c'est-à-dire depuis la chambre 33' jusqu'à la chambre en liaison avec l'orifice 30'.

Sur la figure 3, on voit que l'organe 5″ qui porte les alésages des pistons 1″ est claveté sur un arbre 39″. Dans cet exemple de réalisation, les alésages des pistons 1″ sont disposés de façon radiale, c'est-à-dire perpendiculairement à l'axe de l'arbre 39″. Les pistons 1″ sont contretenus par des ressorts 2″ et prennent appui par des billes 3″ contre une surface faisant came qui est située à l'intérieur du deuxième organe rotatif 4″. Cette surface faisant came est une sorte de gorge circulaire excentrée par rapport à l'axe de l'organe 5″. On voit donc que tout mouvement de rotation de l'un des organes 4″ ou 5″ par rapport à l'autre provoque un mouvement alternatif des pistons 1″. Les clapets d'alimentation 8″ et de refoulement 20″, 26″ sont identiques à ceux décrits dans les deux cas précédents; la seconde surface faisant came 12″ est identique à celle de la figure 2, ainsi que le joint d'étanchéité 21″. L'organe mobile 4″ porte des gorges de poulies comme l'organe mobile 4′. Dans ce cas, le carter fixe 19″ est monté à rotation sur l'organe mobile 4″, par un roulement 38a″ et est placé à l'extrémité dudit organe mobile 4″ qui est opposée à l'arbre 39″.

**Revendications**

1. Embrayage hydrostatique constitué par une pompe hydrostatique, en particulier une pompe hydraulique à auto-amorçage et à sens de rotation réversible, par exemple une pompe à pistons (1, 1′, 1″, dont le carter est relié à l'arbre mené et dont l'arbre moteur constitue l'arbre menant, le mouvement relatif de l'un par rapport à l'autre provoquant, par l'intermédiaire d'une surface faisant came (4, 4′, 4″), la mise en action d'une pluralité de pistons de pompage, le liquide hydraulique étant puisé dans un réservoir (29, 29′, 29″) et ramené après pompage audit réservoir à travers un dispositif de régulation de débit permettant de régler ce débit (24, 24′, 24″) depuis sa valeur maximum pour laquelle le mouvement relatif de l'arbre menant par rapport à l'arbre mené est maximum, jusqu'à une valeur nulle pour laquelle le mouvement relatif de l'arbre menant par rapport à l'arbre mené est nul, caractérisé par le fait qu'on a disposé, entre les zones où il y a des fuites et le côté d'aspiration, des joints d'étanchéité tournants (21, 21′, 21″) qui évitent le débordement des fuites vers le côté d'aspiration, prévoyant un orifice de drainage (30, 30′, 30″) qui permet de ramener directement les fuites au réservoir (29, 29′, 29″) au moyen de composants hydrauliques appropriés, en particulier des échangeurs thermiques (32, 32′, 32″).

2. Embrayage hydrostatique selon la revendication 1, constitué par un carter fixe, étanche (19) relié à un réservoir (29) par une canalisation d'aspiration (15) par une canalisation de refoulement (22) portant des moyens de régulation de débit (23, 24, 25) et par une canalisation de drainage (30); un barillet (5) monté librement à rotation par des roulements (38) à l'intérieur dudit carter (19) portant une pluralité de pistons (1) pouvant se déplacer dans des alésages (2), ledit barillet (5) étant solidaire d'un premier arbre (41) menant ou mené; un plateau biais (4) monté librement à rotation par des roulements (6, 7) à l'intérieur dudit barillet (5), ledit plateau biais (4) étant solidaire d'un deuxième arbre (50) mené ou menant tout mouvement relatif l'un par rapport à l'autre desdits organes memants ou menés (40, 41) entrainant un déplacement des pistons (1) dans leurs alésages (2); des joints tournants d'étanchéité (21) étant disposés entre le carter fixe (19) et le barillet (5) de façon à définir trois zones: une zone d'aspiration (16) en communication avec le conduit d'aspiration (15); une zone de refoulement (21a) en communication avec le conduit de refoulement (22); une zone de récupération des fuites (33) en communication avec le conduit de drainage (30), cette dernière zone étant séparée, de façon totalement étanche à la fois de la zone d'aspiration (15) et de la zone de refoulement (16).

3. Embrayage hydrostatique selon la revendication 2, dans lequel la zone d'aspiration (16) est comprise entre un desdits joints d'étanchéité (21) et un joint d'étanchéité (36) entourant le premier arbre (41) ledit joint d'étanchéité (21) étant soumis à une de ses faces à la pression de refoulement, l'autre joint (36) étant seulement soumis à la pression d'alimentation; la zone de refoulement (21a) est comprise entre deux joints d'étanchéité (21) disposés entre le barillet (5) et le carter fixe (19), ces deux joints d'étanchéité étant soumis à la pression de refoulement et disposés symétriquement; la zone de récupération de fuite est comprise entre le deuxième joint d'étanchéité à haute pression (21) et un joint d'étanchéite basse pression (37) entourant le deuxième arbre (40).

4. Embrayage hydrostatique selon la revendication 3, dans lequel chaque alésage (2) dans lequel se déplace un piston (1) est muni d'un clapet d'aspiration (8) soumis à l'action de deux ressorts antagonistes (9, 11) un des ressorts (11) agissant sur le clapet (8) pour le fermer, l'autre ressort (9) agissant sur le clapet pour l'ouvrir, ledit ressort (9) étant contretenu par une came (12) liée en rotation au deuxième arbre (40).

5. Embrayage hydrostatique selon la revendication 4, dans lequel la came (12) est portée par une tige (12a) coaxiale audit deuxième arbre (40), cette tige (12a) étant reliée en rotation audit deuxième arbre (40) par l'intermédiaire d'un doigt d'indexage (13) pouvant prendre par rapport audit deuxième arbre (40) deux positions à 180° l'un de l'autre.

6. Embrayage hydrostatique selon la revendication 1, constitué par un carter fixe (19') relié à un réservoir (29') par une canalisation d'aspiration (15'), par une canalisation de refoulement (22') portant des moyens de régulation de débit (23', 24', 25') et par une canalisation de drainage (30'); un boîtier (4') monté librement à rotation sur le carter fixe (19') par des roulements (38'a, 38'b) et constituant le premier organe menant ou mené, ledit boîtier comportant une face inclinée faisant office de plateau biais; un barillet (5') monté librement à rotation à l'intérieur du boîtier (4') par des roulements (6', 7'), ledit barillet (5') portant une pluralité de pistons (1') pouvant se déplacer dans des alésages (2') et étant solidaire d'un arbre (41) constituant le deuxième organe mené ou menant, le mouvement relatif des deux organes mobiles l'un par rapport à l'autre provoquant un déplacement desdits pistons (1'); un joint tournant à haute pression (21') assurant une communication directe entre le conduit de refoulement (22'a) ménagé dans le barillet (5') et la canalisation de refoulement (22), tandis qu'un joint d'étanchéite à basse pression (36') assure la séparation étanche entre une zone (16') d'alimentation dans laquelle débouche la canalisation d'alimentation (15') et une zone de récupération des fuites (33') reliée à la canalisation de drainage (30').

7. Embrayage hydrostatique selon la revendication 6, dans lequel la zone de récupération des fuites (33') est séparée de la zone d'alimentation (16') par un joint tournant à basse pression (36') et de la zone de refoulement (22'a) par un joint tournant à haute pression (21').

8. Embrayage hydrostatique selon la revendication 7, dans lequel chaque alésage (2'), dans lequel se déplace un piston (1') est muni d'un clapet d'aspiration (8') soumis à l'action de deux ressorts antagonistes (9', 11') un des ressorts (11') agissant sur le clapet (8') pour le fermer, l'autre ressort (9') pour l'ouvrir, ce dernier étant contretenu par une came (12') liée en rotation au premier organe mobile, constitué par le boîtier mobile (4').

9. Embrayage selon la revendication 8, dans lequel la came (12') est portée par le boîtier rotatif (4') sur lequel elle est montée à rotation par un roulement (14') et est liée en rotation à ce boîtier rotatif (4') constituant le premier organe mobile par unergot (13') pouvant prendre deux positions à 180° par rapport audit boîtier rotatif (4').

10. Embrayage hydrostatique selon la revendication 1, constitué par un carter fixe (19") relié à un réservoir (29") par une canalisation d'aspiration (15"), par une canalisation de refoulement (22") portant des moyens de régulation (23", 24", 25") et par une canalisation de drainage (30"); un premier organe mobile (4") menant ou mené entourant ledit carter (19") et monté librement à rotation sur ce dernier par un roulement (38"a) et comportant une surface faisant came pour agir sur des pistons; un deuxième organe mobile (5") menant ou mené, monté librement à l'intérieur du premier (4") face au carter fixe (19") ledit deuxième organe mobile (5") portant une pluralité de pistons (1") pouvant se déplacer dans des alésages (2") lorsque les deux organes mobiles (4" et 5") ont un mouvement relatif l'un par rapport à l'autre; un joint tournant à haute pression (21") assurant une communication directe entre le refoulement desdits pistons (1") et la canalisation de refoulement (22"), tandis qu'un joint d'étanchéité à basse pression assure la séparation étanche entre une zone d'alimentation (15") et une zone de récupération des fuites (33") reliée à la canalisation de drainage (30").

11. Embrayage hydrostatique selon la revendication 10, dans lequel la zone de récupération des fuites (33") est séparée de la zone d'alimentation (16") par un joint tournant à basse pression (36") et de la zone de refoulement (22"a) par un joint tournant à haute pression (21").

12. Embrayage hydrostatique selon la revendication 11, dans lequel chaque alésage (2") dans lequel se déplace un piston (1") est muni d'un clapet d'aspiration (8") soumis à l'action de deux ressorts antagonistes (9", 11") un des ressorts (11") agissant sur le clapet (8") pour le fermer, l'autre ressort (9") pour l'ouvrir, ce dernier étant contretenu par une came (12") liée en rotation au premier organe mobile (4").

13. Embrayage hydrostatique selon la revendication 12, dans lequel ladite came (12") est portée par ledit premier organe mobile (4") au moyen d'un roulement (14") et est liée en rotation audit organe mobile (4") par l'intermédiaire d'un ergot (13") pouvant prendre deux positions décalées de 90° l'une par rapport à l'autre.

**Patentansprüche**

1. Hydrostatische Kupplung, bestehend aus einer hydrostatischen Pumpe, insbesondere einer selbstansaugenden hydraulischen Pumpe mit umkehrbarer Drehrichtung, z.B. einer Kolbenpumpe (1, 1', 1"), deren Gehäuse an eine angetriebene Welle angeschlossen ist und deren Motorwelle die treibende Welle bildet, wobei die Relativbewegung einer Welle in bezug auf die andere, unter Zwischenschaltung einer eine Nockenscheibe (4, 4', 4") bildenden Oberfläche des Ingangsetzen einer Mehrzahl von Pumpkolben bewirkt, wobei die aus einem Vorratsbehälter (29, 29', 29") entnommene hydraulische Flüssigkeit nach dem Pumpvorgang wieder in diesen Behälter zurückgeführt wird, nachdem sie eine Mengen-Regeleinrichtung (24, 24', 24") durchlaufen hat, die die abgegebene Menge, ausgehend von einem Maximalwert, für welchen die Relativbewegung der treibenden Welle in bezug auf die angetriebene Welle maximal ist, bis auf einen Wert Null regeln kann, bei welchem die Relativbewegung der treibenden Welle gegenüber der angetriebenen Welle null ist, dadurch gekennzeichnet, daß zwischen Bereichen, wo eine Leckage eintreten kann und der Saugseite, Umlaufdichtungen (21, 21', 21") vorgesehen sind, die in Übertreten der Leckage zur Saugseite verhindern, und daß eine Ablaßöffnung (30, 30', 30") vorgesehen ist, welche die direkte Abführung der Leckage zum Behälter (29, 29', 29") über geeignete hydraulische Komponenten, insbesondere Wärmetauscher (32, 32', 32"), ermöglicht.

2. Hydrostatische Kupplung nach Anspruch 1, mit einem dichten, feststehenden Gehäuse (19), das mit einem Behälter (29) über eine Saugleitung (15), eine Druckabgabeleitung (22), welche die Einrichtungen (23, 24, 25) zur Mengenregelung aufweist, und über eine Drainageleitung (30) verbunden ist; sowie mit einer Mittels Wälzlagern (38) frei drehbar im Inneren des Gehäuses (19) gelagerten Trommel (5), die mehrere in Bohrungen (2) in der Trommel (5) verschiebliche Kolben (1) aufnimmt, wobei die Trommel (5) mit einer ersten treibenden oder angetriebenen Welle (41) fest verbunden ist; weiters mit einer Schrägscheibe (4), die mittels Wälzlager (6, 7) frei drehbar im Inneren der Trommel (5) gelagert ist, wobei diese Schrägscheibe (4) mit einer zweiten angetriebenen oder treibenden Welle (52) fest verbunden ist, wodurch jede Relativbewegung zwischen den treibenden und angetriebenen Organen (40, 41) eine Verschiebung der Kolben (1) in ihren Zylinderbohrungen (2) bewirkt; wobei weiters Umlaufdichtungen (21) zwischen dem feststehenden Gehäuse (19) und der Trommel (5) derart vorgesehen sind, daß drei Zonen festgelegt werden; nämlich eine Saugzone (16), die mit der Saugleitung (15) in Verbindung steht; eine Druckzone (21a), die mit der Druckabgabeleitung (22) in Verbindung steht und eine Zone (33) zum Rückgewinnen der Leckage, welche Zone (33) in Verbindung mit der Drainageleitung (30) steht, wobei letztere Zone (33) sowohl von der Ansaugzone (15) als auch von der Druckzone (16) vollkommen dicht getrennt ist.

3. Hydrostatische Kupplung nach Anspruch 2, bei welcher die Saugzone (15) zwischen einer der Umlaufdichtungen (21) und einer Dichtung (36) angeordnet ist, welche die erste Welle (41) umgibt, wobei die Umlaufdichtung (21) auf einer ihrer Seiten dem Abgabedruck ausgesetzt ist, während die andere Dichtung (36) nur dem Saugdruck ausgesetzt ist; bei welcher weiters die Abgabedruckzone (21a) zwischen zwei Dichtungen (21) gelegen ist, die zwischen der Trommel (5) und dem feststehenden Gehäuse (19) angeordnet sind und diese beiden Dichtungen (21) dem Abgabedruck ausgesetzt und symmetrisch angeordnet sind; wobei die Zone zur Rückgewinnung der Leckage zwischen der zweiten Hochdruck-Dichtung (21) und einer Niederdruck-Dichtung (37) liegt, welche die zweite Welle (40) umgibt.

4. Hydrostatische Kupplung nach Anspruch 3, bei welcher jede Bohrung (2), in welcher ein Kolben (1) verschieblich ist, mit einer Ansaugklappe (8) versehen ist, welche unter dem Einflüß von zwei einander entgegenwirkenden Federn (9, 11) steht, deren eine (11) zum Schließen und deren andere (9) zum Öffnen auf die Klappe (8) einwirkt, wobei die letztgenannte Feder (9) von einer Nockenscheibe (12) gegengestützt wird, welche mit der zweiten Welle (40) auf Drehung verbunden ist.

5. Hydrostatische Kupplung nach Anspruch 4, bei welcher die Nockenscheibe (12 von einer Stange (12a) getragen ist, die koaxial zur zweiten Welle (40) angeordnet ist, wobei diese Stange (12a) mit der zweiten Welle (40) unter Zwischenschaltung eines zeigerartigen Daumens (13) auf Drehung verbunden ist, welcher bezüglich der zweiten Welle (40) zwei unter 180° gegeneinander versetzte Stellungen einnehmen kann.

6. Hydrostatische Kupplung nach Anspruch 1, bestehend aus einem feststehenden Gehäuse (19'), das an einen Behälter (29) über eine Saugleitung (15'), eine Druckabgabeleitung (22'), in welcher Mengenregeleinrichtungen (23', 24', 25) liegen, und über eine Drainageleitung (30') angeschlossen ist; aus einem auf dem feststehenden Gehäuse (19) mittels Wälzlagern (38'a, 38'b) frei drehbar gelagerten Gehäuse (4'), welches das erste treibende oder angetriebene Organ bildet und eine geneigte Fläche aufweist, welche die Stelle der Schrägscheibe einnimmt; aus einer Trommel (5'), die mittels Wälzlager (6', 7') frei drehbar im Inneren des drehbar gelagerten Gehäuses (4') angeordnet ist und eine Mehrzahl von Kolben (1') aufnimmt, die in Bohrungen (2') verschieblich sind, wobei das drehbar gelagerte Gehäuse (4') mit einer Welle (41) fest verbunden ist, welche das zweite treibende oder angetriebene Organ bildet und eine Relativbewegung des einen beweglichen Organes bezüglich des anderen eine Verstellung der Kolben (1') bewirkt; aus einer Hochruckumlaufdichtung (21'), die eine direkte Verbindung zwischen der Druckableitung (22'a), die in der Trommel (5') angeordnet ist und der Druckabgabeleitung (22) sichert, wogenen eine Niederdruck-Dichtung (36') eine dichte Trennung zwischen einer Zuführzone (16'), in welche die Zufuhrleitung (15') mündet und einer Zone (33') zur Wiedergewinnung der Leckage sicherstellt, die an die Drainageleitung (30') angeschlossen ist.

7. Hydrostatische Kupplung nach Anspruch 6, bei welcher die Zone (33') zur Wiedergewinnung der Leckage von der Zuführzone (16') durch eine Niederdruck-Umlaufdichtung (35') und von der Druckabgabezone (22'a) durch eine Hochdruck-Umlaufdichtung (21') getrennt ist.

8. Hydrostatische Kupplung nach Anspruch 7, bei welcher jeder Bohrung (2'), in welcher ein Kolben (1') verschiebbar gelagert ist, mit einer Ansaugklappe (8') versehen ist, welche unter der Wirkung von zwei einander entgegenwirkenden Federn (9', 11') steht, deren eine auf die Klappe (8') in Schließrichtung einwirkt, während die andere Feder (9') in Öffnungsrichtung auf die Klappe einwirkt, wobei die letztgenannte Feder (9') durch eine Nockenscheibe (12') gegengestützt wird, welche auf Drehung mit dem ersten beweglichen Organ verbunden ist, welches durch das drehbar gelagerte Gehäuse (4') gebildet ist.

9. Hydrostatische Kupplung nach Anspruch 8, bei welcher die Nockenscheibe (12') von dem drehbar gelagerten Gehäuse (4') getragen wird, auf welchem die Nockenscheibe mittels eines Wälzlagers (14') drehbar gelagert und über einen Anschlag (13') auf Drehung mit dem drehbar gelagerten Gehäuse (4') mitgenommen wird, wobei der Anschlag zwei um 180° gegeneinander versetzte Stellungen bezüglich des drehbar gelagerten Gehäuses (4') einnehmen kann.

10. Hydrostatische Kupplung nach Anspruch 1, bestehend aus einem feststehenden Gehäuse (19''), das mit einem Behälter (29'') über eine Ansaugleitung (15''), eine Druckabgabeleitung (22''), in welcher Steuereinrichtungen (23'', 24'', 25'') liegen und über eine Drainageleitung (30'') verbunden ist; aus einem ersten treibenden oder angetriebenen, beweglichen Organ (4''), welches das Gehäuse (19'') umgibt und auf diesem frei drehbar mittels eines Wälzlagers (38''a) gelagert ist und eine Fläche aufweist, die als Nockenscheibe zur Betätigung der Kolben wirkt; aus einem zweiten beweglichen, treibenden oder angetriebenen Organ (5''), das frei im Inneren des ersten (4'') auf dem feststehenden Gehäuse (19'') gegenüber angebracht ist, wobei dieses zweite bewegliche Organ (5'') mehrere Kolben (1'') trägt, die in Bohrungen (2'') verschieblich sind, wenn die beiden beweglichen Organe (4'' und 5'') sich relativ zueinander bewegen; aus einer Hochdruck-Umlaufdichtung (21''), die eine direkte Verbindung zwischen dem von den Kolben (1'') Verdrängten und der Druckabgabeleitung (22'') sicherstellt, während eine Niederdruck-Dichtung die dichte Trennung zwischen einer Zufuhrzone (15'') und einer an die Drainageleitung (30'') angeschlossenen Zone (33'') zur Wiedergewinnung der Leckage sicherstellt.

11. Hydrostatische Dichtung nach Anspruch 10, bei welcher die Zone (33'') zur Wiedergewinnung der Leckage von der Zufuhrzone (16'') durch eine Niederdruck-Umlaufdichtung (36'') und von der Druckabgabezone (22''a) durch eine Hochdruck-Umlaufdichtung (21'') getrennt ist.

12. Hydrostatische Kupplung nach Anspruch 11, bei welcher jeder Bohrung (2''), in welcher ein Kolben (1'') verschieblich ist, mit einer Ansaugklappe (8'') versehen ist, welche unter der Wirkung von zwei einander entgegenwirkenden Federn (9'', 11'') steht, deren eine (11'', auf die Klappe (8'') in Schließrichtung und deren andere (9'') in Öffnungsrichtung auf die Klappe (8'') einwirkt, wobei die letztgenannte Feder (9'') durch eine Nockenscheibe (12'') gegenabgestützt ist, die drehschlüssig mit dem ersten beweglichen Organ (4'') verbunden ist.

13. Hydrostatische Kupplung nach Anspruch 12, bei welcher die Nockenscheibe (12'') von dem ersten beweglichen Organ (4'') mittels eines Wälzlagers (14'') getragen wird und auf Drehung mit dem beweglichen Organ (4'') unter Zwischenschaltung eines Anschlages (13'') verbunden ist, welcher zwei um 90° gegeneinander versetzte Stellungen einnehmen kann.

**Claims**

1. A hydrostatic clutch formed of a hydrostatic pump, more particularly a self-priming hydraulic pump with a reversible direction of rotation, for instance a pump having pistons (1, 1', 1''), the casing of said pump being connected to the driven shaft, the drive shaft of said pump being the leading shaft, relative movement of either shaft relative to the other causing, through the intermediary of a surface operating as a cam (4, 4', 4''), the actuation of a plurality of pumping pistons, the hydraulic liquid being drawn from a tank (29, 29', 29'') and returned to said tank after being pumped through a flow regulating device (24, 24', 24'') allowing this outflow rate to be regulated from its maximum value at which the relative movement of the leading shaft relative to the driven shaft is at a maximum, down to zero value at which the relative movement of the leading shaft relative to the driven shaft is nil, characterized in that there are provided, between the zones where leakage occurs and the suction side, rotating gaskets (21, 21', 21'') which prevent leaks from overflowing towards the suction side, a draining orifice (30, 30', 30'') being provided for directly returning leaks to the tank (29, 29', 29'') by means of appropriate hydraulic components, more particularly by means of heat exchangers (32, 32', 32'').

2. A hydrostatic clutch according to claim 1, formed of a fluid-tight fixed casing (19) connected to a tank (29) through a suction line (15), through a pumping-out line (22) carrying flow-regulating means (23, 24, 25) and through a drainage line (30); a barrel (5) freely rotating inside said casing (19) inside which it is mounted on bearings (38), said barrel carrying a plurality of pistons (1) being movable inside bores (2), said barrel (5) being bound up with a first leading or driven shaft (41); a slanted plate (4) mounted on bearings (6, 7) for rotating freely inside said barrel (5), said slanted plate (4) being bound up with a second driven or leading shaft (41), any relative movement of either of said leading or driven members (40, 41) causing a displacement of the pistons (1) in their bores (2); rotating gaskets (21) being provided between the fixed casing (19) and the barrel (5) so as to define three zones, namely a suction zone (16) communicating with the suction line (15); a pumping-out zone (21a) communicating with the pumping-out line (22); a leakage recovery zone (33) communicating with the drainage duct (30), this last zone (33) being separated in totally fluid-tight manner from the suction zone (15) as well as from the pumping out zone (16).

3. A hydrostatic clutch according to claim 2, in which the suction zone (16) is comprised between one of said gaskets (21) and one fluid-tight gasket (36) placed around the first shaft (41), said gasket (21) being subjected on one of its faces to the pumping-out pressure, the other gasket (36) being merely subjected to the feeding pressure; the pumping-out zone (21a) is comprised between two fluid-tight gaskets (21) arranged between the barrel (5) and the fixed casing (19), both these gaskets (21) being subjected to the pumping-out pressure and arranged symmetrically; the leakage recovery zone (33) is comprised between the second high-pressure gasket (21) and a low-pressure gasket (37) surrounding the second shaft (40).

4. A hydrostatic clutch according to claim 3, in which each bore (2) in which is moving a piston (1) is provided with a suction valve (8) subjected to the action of two antagonist springs (9, 11), one of said springs (11) acting upon the valve for closing it, the other spring (9) acting upon the valve for opening it, said other spring (9) being braced by a cam (12) rotatingly bound to the second shaft (40).

5. A hydrostatic clutch according to claim 4, in which the cam (12) is carried by a rod (12a) coaxial to said second shaft (40), this rod (12a) being rotatingly bound to said second shaft (40) by means of an indexing pawl (13) capable of taking, relatively to said second shaft (40), two positions spaced at 180° from one another.

6. A hydrostatic clutch according to claim 1, formed of a fixed casing (19') connected to a tank (29') through a suction line (15'), through a pumping-out line (22') carrying flow-regulating means (23', 24', 25') and through a drainage line (30'); a housing (4') mounted for rotating freely on the fixed casing (19') by means of bearings (38'a, 38'b) and forming the first leading or driven member, said housing comprising a slanted face operating as a slanted plate; a barrel (5') mounted for rotating freely inside the housing (4') by means of bearings (6', 7'), said barrel carrying a plurality of pistons (1') capable of moving inside bores (2'), said barrel (5') being bound up with a shaft (41) forming the second driven or leading member, relative movement of the two mobile members relative to one another causing a displacement of said pistons (1'); a rotating high-pressure gasket (21') providing a direct communication between the pumping-out duct (22'a) provided in the barrel (5') and the pumping-out line (22), a low-pressure fluid-tight gasket (36') being provided for ensuring a fluid-tight separation between a feed zone (16') in which opens the feed line (15') and a leakage recovery zone (33') connected to the drainage line (30').

7. A hydrostatic clutch according to claim 6, in which the leakage recovery zone (33') is separated from the feed zone (16') by a low-pressure rotating gasket (36') and from the pumping-out zone (22'a) by a high-pressure rotating gasket (21').

8. A hydrostatic clutch according to claim 7, wherein each bore (2') inside which moves a piston (1') is provided with a suction valve (8') subjected to the action of two antagonist springs (9', 11'), one of said springs (11') acting upon the valve (8') for closing it, the other spring (9') for opening it; said other spring (9') being braced by a cam (12') rotatingly bound to the first mobile member constituted by the mobile housing (4').

9. A hydrostatic clutch according to claim 8, in which the cam (12') is carried by the rotating housing (4') on which it is rotatably mounted by means of a bearing (14') and is rotatingly bound to said rotating housing (4') which forms the first mobile member by means of a lug (13') capable of taking two positions spaced apart at 180' relatively to said rotating housing (4').

10. A hydrostatic clutch according to claim 1, formed of a fixed casing (19") connected to a tank (29") through a suction line (15"), through a pumping-out line (22") carrying regulation means (23", 24", 25") and through a drainage line (30"); a first leading or driven mobile member (4") surrounding said casing (19") and mounted for rotating freely on the latter by means of a bearing (38"a) and comprising a surface operating as a cam for acting upon pistons; a second leading or driven mobile member (5") mounted freely inside the first member (4") opposite to the fixed casing (19"), said second mobile member (5") carrying a plurality of pistons (1") capable of moving inside bores (2") when the two mobile members (4" and 5") are moving relative to each other; a high-pressure rotary gasket (21") ensuring a direct communication between the pumping-out side of said pistons (1") and the pumping-out line (22"), a low-pressure fluid-tight gasket being provided for ensuring a fluid-tight separation between a feed zone (15") and a leakage recovery zone (33") connected to the drainage line (30").

11. A hydrostatic clutch according to claim 10, in which the leakage recovery zone (33") is separated from the feed zone (16") by a low-pressure rotary gasket (36") and from the pumping-out zone (22"a) by a high-pressure rotary gasket (21").

12. A hydrostatic clutch according to claim 11, in which every bore (2") inside which is moving a piston (1") is provided with a suction valve (8") subjected to the action of two antagonist springs (9", 11"), one of said springs (11") acting upon the valve (8") for closing it, the other spring (9") for opening it, this latter spring (9") being braced by a cam (12") rotatingly bound to the first mobile member (4").

13. A hydrostatic clutch according to claim 12, wherein said cam (12") is carried by said first mobile member (4") by means of a bearing (14") and is rotatingly bound to said mobile member (4") through the intermediary of a lug (13") capable of taking two positions offset at 90° from each other.

*Fig. 1*

0 082 039

Fig.2

0 082 039

Fig:3

0 082 039